# EUROPÄISCHE PATENTSCHRIFT

(11) **EP 2 457 807 B1**
(45) Veröffentlichungstag und Bekanntmachung des Hinweises auf die Patenterteilung: **05.05.2021**
(21) Anmeldenummer: 11008491.0
(22) Anmeldetag: 22.10.2011
(51) Int. Cl.: B62D 21/11

(54) **Hilfsrahmen für ein Kraftfahrzeug**
Subframe for a motor vehicle
Berceau de véhicule automobile

(30) Priorität: 25.11.2010 DE 102010052549; 13.05.2011 DE 102011101408
(43) Veröffentlichungstag der Anmeldung: 30.05.2012
(73) Patentinhaber: Audi AG, 85045 Ingolstadt (DE)
(72) Erfinder: Kramer, Tobias, 85134 Stammham (DE)
(74) Vertreter: Bauer, Dominik Michael

(56) Entgegenhaltungen:
- EP-A2- 1 829 767
- EP-A2- 1 837 268
- DE-A1- 19 532 531
- DE-A1-102008 063 448
- DE-A1-102009 058 400
- DE-A1-102010 017 991
- US-A- 4 392 545
- US-A- 5 417 454
- US-A1- 2004 046 381
- US-A1- 2004 227 320
- US-B1- 6 390 224

## Beschreibung

Die Erfindung betrifft einen Hilfsrahmen für ein Kraftfahrzeug gemäß der im Oberbegriff des Anspruches 1 angegebenen Art.

Derartige, auch als Fahrschemel bezeichnete Hilfsrahmen für ein Kraftfahrzeug sind aus dem Stand der Technik hinreichend bekannt und bieten neben einer Abkopplung von Störeinflüssen auf den Aufbau bzw. die Karosserie des Kraftfahrzeugs auch den Vorteil, dass diverse Fahrzeugkomponenten leicht zugänglich daran lagerbar sind. Hierzu sind am Hilfsrahmen sogenannte Funktionsknoten ausgebildet, an denen die Fahrzeugkomponenten befestigbar sind und über die der Hilfsrahmen mit der Karosserie des Kraftfahrzeugs verbindbar ist.

Ein gattungsgemäßer Hilfsrahmen zur Aufnahme von Komponenten des Fahrwerks und/oder des Antriebsaggregats des Kraftfahrzeugs ist in der DE 10 2005 055 978 A1 beschrieben. Der offenbarte Hilfsrahmen umfasst im Wesentlichen in Fahrtrichtung verlaufende linke und rechte Längsträger sowie einen die beiden Längsträger verbindenden Querträger. Die Längsträger setzen sich jeweils aus einem vorderen und hinteren Gussknoten sowie einem die beiden Gussknoten verbindenden Rohrprofil zusammen. Jeder Gussknoten umfasst dabei eine Lenkeranbindung sowie entsprechende Anschraubpunkte zur Befestigung des Hilfsrahmens an der Karosserie des Kraftfahrzeugs. Zudem sind die beiden Längsträger über ein Strebenkreuz miteinander verbunden. Als nachteilig erweist sich hierbei insbesondere, dass der Hilfsrahmen aufgrund seines Zusammenbaus aus Knoten in Gussausführung komplettiert durch Quer- und Längsprofile z.B. in Rohrform, eine aufwändig und verhältnismäßig teure gefügte Konstruktion darstellt.

Aus der US 5,417,454 A ist eine Vorrichtung zur Aufrechterhaltung der strukturellen Steifheit eines Automobilrahmens bekannt. Hierzu ist ein Querträger mit voneinander beabstandeten Enden vorgesehen, von denen jedes Ende zur Befestigung an einer Rahmenschiene eines ausgewählten Automobilrahmens an der Stelle der Befestigung einer unteren Querlenkerstrebe des Automobils eingerichtet ist. Das Trägerelement dient dazu, die Rahmenschienen der rechten und linken Seite des Kraftfahrzeugs fest miteinander zu verbinden und sie in einer vorbestimmten festen, voneinander beabstandeten Beziehung zu halten. Vorzugsweise ist zudem eine X-förmige Strebe 3 vorgesehen, die sich zwischen dem Querträger und einem vorderer Querrahmenelement des Rahmens unter dem Kühler erstreckt.

Die EP 1 837 268 A2 offenbart einen Hilfsrahmen für Kraftfahrzeuge, der zumindest eine erste Lagerstelle aufweist, die zusammen mit zumindest einer weiteren hilfsrahmenseitigen und/oder karosserieseitigen Lagerstelle ein Antriebsaggregat abstützt. Zudem weist der Hilfsrahmen einen Grundhilfsrahmen auf, der die zumindest eine hilfsrahmenseitige Lagerstelle vorsieht, und der mittels eines Adapterteils erweiterbar ist, das zumindest eine Zusatzlagerstelle bereitstellt.

Aus der DE 195 32 531 A1, die in Bezug auf den Patentanspruch 1 den nächstliegenden Stand der Technik bildet und gegenüber der der Patentanspruch 1 abgegrenzt wurde, ist ein Fahrzeugaufbau für ein Kraftfahrzeug bekannt. Der Fahrzeugaufbau umfasst mit Längsträgern der Karosserie versteifend verbundene Elemente, die aus zwei zum Fahrzeugheck V-Förmig zulaufenden Streben bestehen. Diese sind über mindestens einen Querträger miteinander verbunden. Die freien Enden der V-förmigen Streben sind mit einer einteiligen Trägerplatte verbunden, die zwei über einen integrierten Querträger miteinander verbundene trapezförmige Segmente umfasst. Das eine trapezförmige Segment weist in Verlängerung der V-förmigen Streben verlaufende profilierte Seitenkanten auf. Dabei ist die Trägerplatte über mindestens eine in der Längsachse des Fahrzeugs liegende - in Bezug auf die Fahrtrichtung - vordere Verbindungsstelle an einem Querträger und über eine weitere hinter liegende Verbindungsstelle mit einer vertikal ausgerichteten und am Fahrzeugaufbau befestigten Querstütze verbunden. Gleichzeitig erfolgt eine Verbindung der Trägerplatte mit den freien Enden der Streben in einen Knotenpunkt mit einem die Radführungslenker aufnehmenden Seitenträger.

Die EP 1 829 767 A2 offenbart einen Hilfsrahmen zur Befestigung an einer Karosserie eines Kraftwagens mit zwei in Fahrzeuglängsrichtung verlaufenden und voneinander beabstandeten Längsträgerelementen, welche über wenigstens ein in Fahrzeugquerrichtung verlaufendes Querträgerelement miteinander verbunden sind, wobei der Verbund aus den Längsträgerelementen und dem Querträgerelement durch ein Versteifungselement ausgesteift ist, und wobei die Längsträgerelemente jeweils ein zwischen einem vorderen und hinteren Metallgussteil angeordnetes, als energieabsorbierendes Deformationsteil ausgebildetes Längsträgerteil umfassen. Das Versteifungselement ist dabei zumindest einerseits mit dem Querträgerelement und anderseits mit den hintern Metallgussteilen verbunden.

Der Erfindung liegt die Aufgabe zugrunde einen Hilfsrahmen für ein Kraftfahrzeug gemäß der im Oberbegriff des Anspruches 1 angegebenen Art derart weiter zu bilden, so dass eine Steifigkeitserhöhung der hinteren Lenkeranbindungsstelle in Fahrzeughochrichtung sichergestellt ist.

Diese Aufgabe wird durch die kennzeichnenden Merkmale des Anspruches 1 in Verbindung mit seinen Oberbegriffsmerkmalen gelöst.

Die Unteransprüche bilden eine vorteilhafte Weiterbildung der Erfindung.

In bekannter Art und Weise umfasst der Hilfsrahmen für ein Kraftfahrzeug zur Anbindung verschiedener Fahrzeugkomponenten zwei in Fahrtrichtung betrachtet vordere Funktionsknoten sowie zwei, in Fahrrichtung betrachtet dahinter angeordnete, hintere Funktionsknoten. Die Funktionsknoten sind dabei so ausgebildet, dass über diese eine Anbindung diverser Fahrzeugkomponenten am Hilfsrahmen und/oder eine Befestigung des Hilfsrahmen an der Fahrzeugkarosserie ermöglicht ist. Zudem ist zwischen den vorderen und den hinteren Funktionsknoten ein als ein plattenförmiges, fachwerkähnliches Bauteil ausgebildetes Verstärkungselement angeordnet und die beiden vorderen Funktionsknoten sind ausschließlich über das plattenförmig, fachwerkähnlich ausgebildete Verstärkungselement lösbar mit den beiden hinteren Funktionsknoten verbunden.

Weiterhin bilden die beiden hinteren Funktionsknoten mit dem plattenförmig, fachwerkähnlich ausgebildeteten Verstärkungselement eine Baueinheit und die beiden vorderen Funktionsknoten sind ausschließlich über das Verstärkungselement miteinander verbunden. Hier erweist sich als besonders vorteilhaft, dass neben dem Wegfall des Querträgers und der damit verbundenen Gewichtsreduzierung auch eine entsprechende Vereinfachung aufgrund des Wegfalls der weiteren Befestigungs-/Schraubpunkte an den hinteren Funktionsknoten realisiert ist.

Erfindungsgemäß sind die hinteren Funktionsknoten zusätzlich in Fahrzeughochrichtung an der Fahrzeugkarosserie lösbar festgelegt. Hierfür ist die laschenförmig ausgebildete, jeweils eine vordere und hintere Anbindungslasche aufweisende hintere Lenkeranbindungsstelle der hinteren Funktionsknoten über die vordere oder hintere Anbindungslasche zusätzlich an der Fahrzeugkarosserie befestigt. Durch die zusätzliche Befestigung der hinteren Funktionsknoten ist in vorteilhafter Weise eine Steifigkeitserhöhung der hinteren Lenkeranbindungsstelle in Fahrzeughochrichtung sichergestellt.

Vorzugsweise ist hierbei die vordere oder hintere Anbindungslasche der hinteren Lenkeranbindungsstelle mittels einer Schraubverbindung unmittelbar an der Fahrzeugkarosserie befestigt. Dies ist beispielsweise durch eine konstruktive Umgestaltung der vorderen oder hinteren Anbindungslasche, z.B. Ausbildung einer in Fahrzeughochrichtung ausgerichteten Verlängerung an der vorderen oder hinteren Anbindungslasche, realisierbar. Diese Befestigung zeichnet sich insbesondere durch ihre konstruktive Einfachheit und der damit verbundenen kostengünstigen Herstellung aus.

Alternativ kann aber auch die zusätzliche Befestigung der hinteren Lenkeranbindungsstelle mittels eines zwischen Fahrzeugkarosserie und der vorderen oder der hinteren Anbindungslasche angeordneten Koppelelements erfolgen. Vorteilhaft ist hierbei, dass durch das Vorsehen eines separaten Koppelelements, dieses für Transportzwecke entfernbar ist, wodurch eine erhöhte Stapeldichte beim Transport ermöglicht ist.

Vorzugsweise erfolgt die zusätzliche, in Fahrzeughochrichtung wirkende Befestigung der hinteren Fahrzeugknoten mittels einer leicht zu montierenden bzw. demontierenden Schraubverbindung.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

Die Erfindung wird im Folgenden anhand der in den Zeichnungen dargestellten Ausführungsbeispielen näher beschrieben.

In der Beschreibung, in den Ansprüchen und in der Zeichnung werden die in der unten aufgeführten Liste der Bezugzeichen verwendeten Begriffe und zugeordneten Bezugzeichen verwendet.

In der Zeichnung bedeutet:
- Fig. 1: eine Draufsicht auf eine erste Ausführungsform eines Hilfsrahmens;
- Fig. 2: eine Draufsicht auf eine zweite Ausführungsform eines Hilfsrahmens;
- Fig. 3: eine Seitenansicht der zweiten Ausführungsform des Hilfsrahmens, bei dem erfindungsgemäß die hinteren Funktionsknoten unmittelbar an der Fahrzeugkarosserie befestigt sind, und
- Fig. 4: eine weitere Seitenansicht des zweiten Hilfsrahmens, bei dem die hinteren Funktionsknoten unter Zwischenschaltung eines Koppelelements an der Fahrzeugkarosserie befestigt sind.

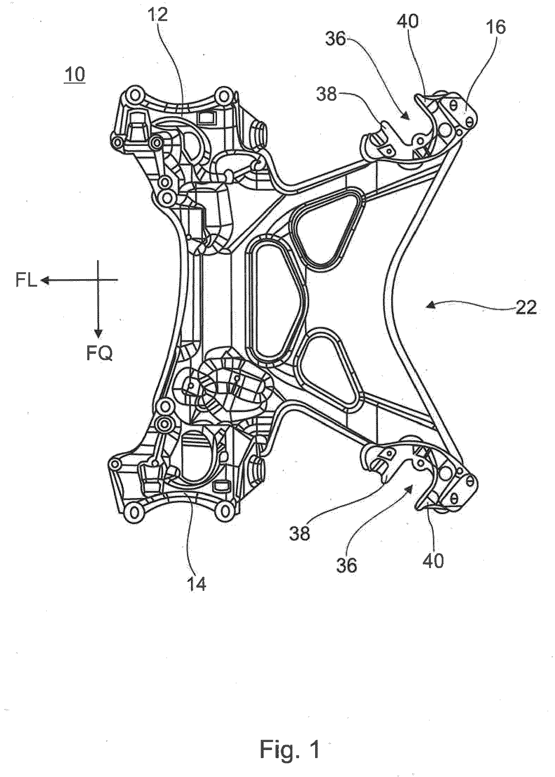

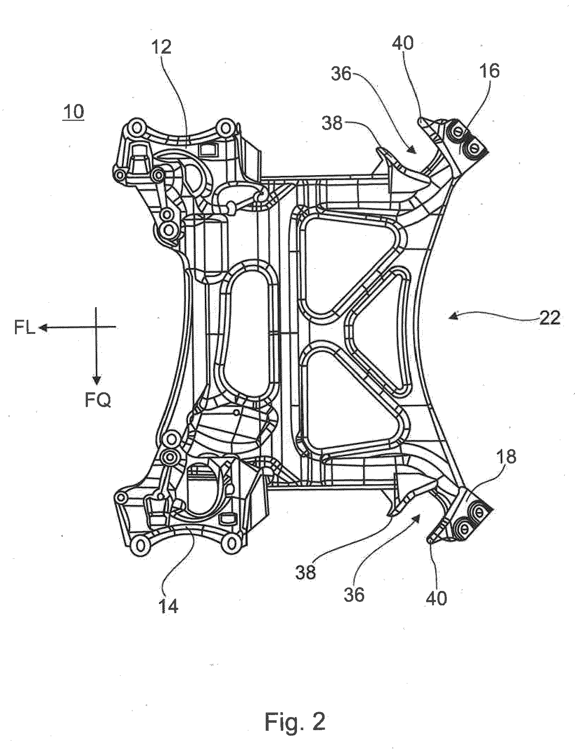

Fig. 1 und 2 zeigen mehr oder minder schematisch in einer Draufsicht jeweils einen insgesamt mit der Bezugsziffer 10 bezeichneter Hilfsrahmen für ein Kraftfahrzeug.

Der Hilfsrahmen 10 gemäß Fig. 1 weist in Fahrzeuglängsrichtung FL betrachtet zwei vordere Funktionsknoten sowie zwei hintere Funktionsknoten auf, nämlich einen ersten vorderen Funktionsknoten 12, einen zweiten Funktionsknoten 14, einen ersten hinteren Funktionsknoten 16 sowie einen zweiten hinteren Funktionsknoten 18.

Wie Fig. 1 weiter zu entnehmen ist, sind hierbei die vorderen Funktionsknoten 12, 14 ausschließlich über ein, insgesamt mit der Bezugsziffer 22 bezeichnetes Verstärkungselement mit dem hinteren Funktionsknoten 16, 18 verbunden.

Wie Fig. 1 weiter zu entnehmen ist, weisen die hinteren Funktionsknoten 16, 18 jeweils eine laschenförmig ausgebildete Lenkeranbindungsstelle 36 auf. Die Lenkeranbindungsstelle 36 umfasst jeweils eine in Fahrzeuglängsrichtung betrachtet vordere Anbindungslasche 38 sowie eine hintere Anbindungslasche 40.

Diese dargestellte Ausführungsform des Hilfsrahmens 10 zeichnet sich insbesondere dadurch aus, dass die beiden vorderen Funktionsknoten 12, 14 ausschließlich über das Verstärkungselement 22 miteinander verbunden sind.

Wie Fig. 1 weiterhin zu entnehmen ist, sind die beiden hinteren Funktionsknoten 16, 18 wiederum als separate Bauteile ausgebildet und lösbar mit dem Verstärkungselement 22 verbunden. Vorliegend ist das Verstärkungselement 22 als ein plattenförmiges, fachwerkähnliches Bauteil ausgebildet.

Das in Fig. 2 dargestellte Ausführungsbeispiel zeichnet sich dadurch aus, dass die beiden vorderen Funktionsknoten 12, 14 wiederum ausschließlich über das Verstärkungselement 22, d.h querträgerlos miteinander verbunden sind. Im Gegensatz zu dem in Fig. 1 dargestellten Ausführungsform sind nunmehr jedoch die hinteren Funktionsknoten 16, 18 nicht als separate Bauteile ausgebildet, sondern bilden mit dem Verstärkungselement 22 eine Baueinheit.

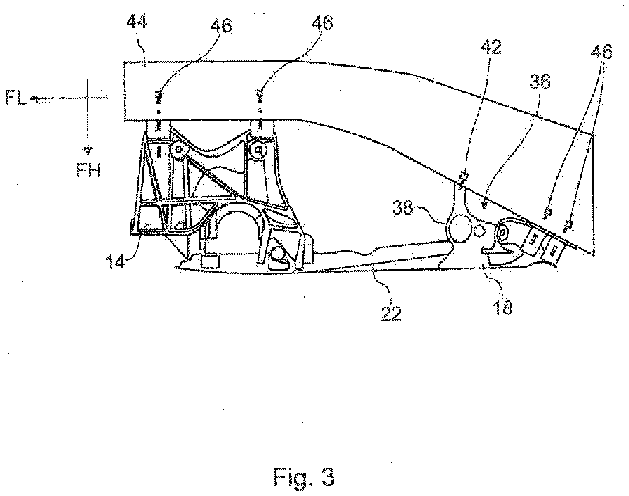

Wie aus Fig. 3 ersichtlich, ist an der vorderen Anbindungslasche 38 eine Verlängerung ausgebildet, über die der hintere Funktionsknoten 18 mittels einer, hier lediglich schematisch dargestellten, zusätzlichen Schraubverbindung 42 in Fahrzeughochrichtung FH mit der Fahrzeugkarosserie 44 verbunden ist. D.h., dass der erfindungsgemäße Hilfsrahmen 10 neben den hier lediglich schematisch dargestellten regulären Schraubverbindungen 46, über die zusätzliche Schraubverbindung 42 in Fahrzeughochrichtung FH zusätzlich festgelegt ist. Durch die zusätzliche Befestigung ist in vorteilhafter Weise eine erhöhte Steifigkeit der hinteren Lenkeranbindungsstelle 36 in Fahrzeughochrichtung FH gewährleistet.

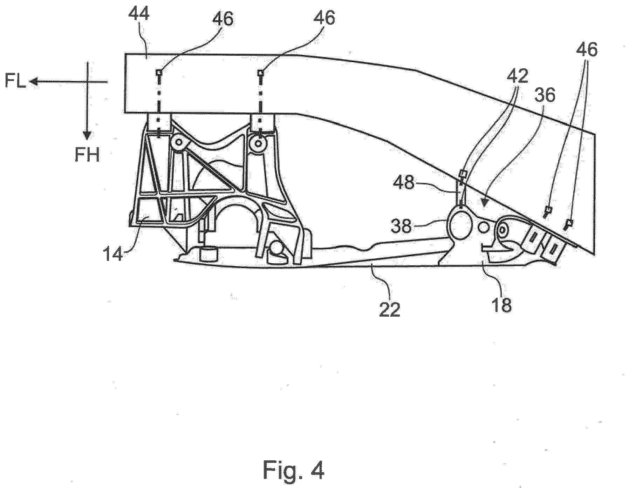

Bei der in Fig. 4 dargestellten Ausführungsform ist die zusätzliche Befestigung der hinteren Anbindungsstelle 36 des hinteren Funktionsknoten 18 mittels eines zwischen Fahrzeugkarosserie 44 und der vorderen Anbindungslasche 38 angeordneten Koppelelements 48 ausgeführt.

### Bezugszeichenliste

- 10: Hilfsrahmen
- 12: erster vorderer Funktionsknoten
- 14: zweiter vorderer Funktionsknoten
- 16: erster hinterer Funktionsknoten
- 18: zweiter hinterer Funktionsknoten
- 22: Verstärkungselement
- 36: hintere Lenkeranbindungsstelle
- 38: vordere Anbindungslasche
- 40: hintere Anbindungslasche
- 42: zusätzliche Schraubverbindung
- 44: Karosserie
- 46: reguläre Schraubverbindungen
- 48: Koppelelement
- FQ: Fahrzeugquerrichtung
- FL: Fahrzeuglängsrichtung
- FH: Fahrzeughochrichtung

## Patentansprüche

1. Hilfsrahmen (10) für ein Kraftfahrzeug, umfassend zwei in Fahrtzeuglängsrichtung (FL) betrachtet vordere Funktionsknoten (12, 14) sowie zwei hintere Funktionsknoten (16, 18), jeweils zur Anbindung verschiedener Fahrzeugkomponenten, wobei zwischen den vorderen und hinteren Funktionsknoten (12, 14; 16, 18) ein Verstärkungselement (22) angeordnet ist, wobei das Verstärkungselement (22) als ein plattenförmiges, fachwerkähnliches Bauteil ausgebildet ist und die beiden vorderen Funktionsknoten (12, 14) ausschließlich über das plattenförmig, fachwerkähnlich ausgebildeten Verstärkungselement (22) lösbar mit den beiden hinteren Funktionsknoten (16, 18) verbunden sind und wobei die beiden hinteren Funktionsknoten (16, 18) mit dem plattenförmig, fachwerkähnlich ausgebildeten Verstärkungselement (22) eine Baueinheit bilden, und die beiden vorderen Funktionsknoten (12, 14) unter Wegfall eines Querträgers ausschließlich über das plattenförmig, fachwerkähnlich ausgebildeten Verstärkungselement (22) miteinander verbunden sind, **dadurch gekennzeichnet, dass** die hinteren Funktionsknoten (16, 18) jeweils eine laschenförmig ausgebildete, in Fahrzeuglängsrichtung (FL) betrachtet eine vordere und eine hintere Anbindungslasche (38, 40) aufweisende hintere Lenkeranbindungsstelle (36) aufweisen, wobei die hinteren Funktionsknoten (16, 18) jeweils über die vordere oder hintere Anbindungslasche (38, 40) der hinteren Lenkeranbindungsstelle (36) in Fahrzeughochrichtung (FH) an der Fahrzeugkarosserie (44) befestigbar sind.

2. Hilfsrahmen nach Anspruch 1, **dadurch gekennzeichnet, dass** die vordere oder hintere Anbindungslasche (38, 40) der hinteren Lenkeranbindungsstelle (36) unmittelbar an der Fahrzeugkarosserie (44) befestigt ist.

3. Hilfsrahmen nach Anspruch 1, **dadurch gekennzeichnet, dass** die vordere oder hintere Anbindungslasche (38, 40) mittels eines separaten, zwischen der Fahrzeugkarosserie (44) und der vorderen oder hinteren Anbindungslasche (38, 40) angeordneten, für Transportzwecke entfernbaren Koppelelements (48) an der Fahrzeugkarosserie (44) befestigt ist.

4. Hilfsrahmen nach einem der vorgenannten Ansprüche, **dadurch gekennzeichnet, dass** die vordere oder hintere Anbindungslasche (38, 40) mittels einer Schraubverbindung (42) an der Fahrzeugkarosserie (44) befestigt ist.

## Claims

1. Subframe (10) for a motor vehicle, comprising, viewed in longitudinal direction of the vehicle (FL), two front functional nodes (12, 14) as well as two rear functional nodes (16, 18), in each case for the connection of different vehicle components, wherein between the front and rear functional nodes (12, 14; 16, 18) is arranged a reinforcing element (22), wherein the reinforcing element (22) is in the form of a plate-like timber-frame-like component and the two front functional nodes (12, 14) are connected exclusively via the plate-like timber-frame-like reinforcing element (22) releasably with the two rear functional nodes (16, 18) and wherein the two rear functional nodes (16, 18) form with the plate-like timber-frame-like reinforcing element (22) a constructional unit, and the two front functional nodes (12, 14) in the absence of a crossbeam are mutually connected exclusively via the plate-like timber-frame-like reinforcing element (22), **characterised in that** the rear functional nodes (16, 18) have in each case one rear link connection point (36) having - viewed in longitudinal direction of the vehicle (FL) - one front and one rear connecting tab (38, 40), formed in each case in the manner of a tab, wherein the rear functional nodes (16, 18) can be fastened in each case via the front or rear connecting tab (38, 40) of the rear link connection point (36) in vertical direction of the vehicle (FH) to the vehicle body (44).

2. Subframe according to claim 1, **characterised in that** the front or rear connecting tab (38, 40) of the rear link connection point (36) is fastened directly to the vehicle body (44).

3. Subframe according to claim 1, **characterised in that** the front or rear connecting tab (38, 40) is fastened to the vehicle body (44) by means of a separate coupling element (48), removable for transportation purposes, arranged between the vehicle body (44) and the front or rear connecting tab (38, 40).

4. Subframe according to any of the preceding claims, **characterised in that** the front or rear connecting tab (38, 40) is fastened to the vehicle body (44) by means of a screw connection (42).

## Revendications

1. Faux-châssis (10) pour un véhicule automobile, comprenant deux nœuds fonctionnels (12, 14) avant considéré dans le sens longitudinal du véhicule (FL) ainsi que deux nœuds fonctionnels (16, 18) arrière, respectivement pour la liaison de différents composants de véhicule, dans lequel un élément de renforcement (22) est agencé entre les nœuds fonctionnels avant et arrière (12, 14; 16, 18), dans lequel l'élément de renforcement (22) est réalisé comme un composant semblable à un treillis, en forme de plaque et les deux nœuds fonctionnels (12, 14) avant sont reliés exclusivement par le biais de l'élément de renforcement (22) réalisé de manière semblable à un treillis, en forme de plaque de manière détachable aux deux nœuds fonctionnels (16, 18) arrière et dans lequel les deux nœuds fonctionnels (16, 18) arrière forment avec l'élément de renforcement (22) réalisé de manière semblable à un treillis, en forme de plaque une unité de construction, et les deux nœuds fonctionnels (12, 14) avant sont reliés entre eux par suppression d'une poutre transversale exclusivement par le biais de l'élément de renforcement (22) réalisé de manière semblable à un treillis, en forme de plaque, **caractérisé en ce que** les nœuds fonctionnels (16, 18) arrière présentent respectivement un point de liaison de bras (36) arrière réalisé en forme de languette, considéré dans le sens longitudinal de véhicule (FL) présentant une languette de liaison (38, 40) avant et arrière, dans lequel les nœuds fonctionnels (16, 18) arrière peuvent être fixés respectivement par le biais de la languette de liaison (38, 40) avant ou arrière du point de liaison de bras (36) arrière dans le sens vertical de véhicule (FH) à la carrosserie de véhicule (44).

2. Faux-châssis selon la revendication 1, **caractérisé en ce que** la languette de liaison (38, 40) avant ou arrière du point de liaison de bras (36) arrière est fixée directement à la carrosserie de véhicule (44).

3. Faux-châssis selon la revendication 1, **caractérisé en ce que** la languette de liaison (38, 40) avant ou arrière est fixée au moyen d'un élément de couplage (48) séparé, agencé entre la carrosserie de véhicule (44) et la languette de liaison (38, 40) avant ou arrière, retirable à des fins de transport à la carrosserie de véhicule (44).

4. Faux-châssis selon l'une des revendications précédentes, **caractérisé en ce que** la languette de liaison (38, 40) avant ou arrière est fixée au moyen d'une liaison de vissage (42) à la carrosserie de véhicule (44).
